# FASCICULE DE BREVET EUROPEEN

(11) **EP 3 272 071 B1**
(45) Date de publication et mention de la délivrance du brevet: **24.02.2021**
(21) Numéro de dépôt: 16712970.9
(22) Date de dépôt: 17.03.2016
(51) Int. Cl.: H04L 12/24, H04B 3/54

(54) **CHANGEMENT DE RACCORDEMENT D'UN NOEUD DANS UN RÉSEAU CPL**
ÄNDERUNG DER VERBINDUNG EINES KNOTENS IN EINEM PLC-NETZWERK
CHANGE OF CONNECTION OF A NODE IN A PLC NETWORK

(30) Priorité: 20.03.2015 FR 1552345
(43) Date de publication de la demande: 24.01.2018
(73) Titulaire: Electricite Reseau Distribution France, 92079 Paris La Defense Cedex (FR)
(72) Inventeur: LAVENU, Cédric, 91300 Massy (FR)
(74) Mandataire: Plasseraud IP
(86) Numéro de dépôt international: PCT/FR2016/050593
(87) Numéro de publication internationale: WO 2016/151217

(56) Documents cités:
- EP-A1- 2 131 506
- US-A1- 2007 230 331

## Description

La présente invention appartient au domaine du raccordement d'un nœud à un réseau CPL, pour Courants Porteurs en Ligne. Elle concerne en particulier un procédé de changement de raccordement d'un nœud d'un premier réseau CPL à un deuxième réseau CPL, pour qu'une connexion du nœud à un réseau CPL puisse être maintenue, typiquement en cas de défaillance du premier réseau CPL.

Cette méthode est particulièrement avantageuse dans le cas d'applications où les nœuds doivent communiquer en temps réel via un réseau CPL-G3.

On entend par « réseau CPL », l'ensemble des canaux et des nœuds, coordonnés par un même dispositif coordinateur, constituant un réseau de communication s'appuyant sur un réseau électrique. On distingue ainsi un premier réseau CPL d'un deuxième réseau CPL par un raccordement des nœuds du premier réseau CPL à un premier dispositif coordinateur et un raccordement des nœuds du deuxième réseau CPL à un deuxième dispositif coordinateur. Un nœud qui change de dispositif coordinateur en passant d'un premier dispositif coordinateur à un deuxième dispositif coordinateur change ainsi de raccordement, d'un premier réseau CPL à un deuxième réseau CPL. Le terme anglais « handover » peut-être utilisé pour désigner le changement de raccordement d'un nœud, d'un premier réseau CPL vers un deuxième réseau CPL.

On entend par « dispositif coordinateur » un nœud particulier d'un réseau CPL donné qui assure des fonctions de coordination des autres nœuds du réseau CPL donné. Un dispositif coordinateur est indifféremment appelé dispositif coordinateur, dispositif de coordination ou coordinateur dans la suite de la description.

Une fonction importante de coordination d'un tel dispositif est d'assurer aux nœuds du réseau CPL un point d'accès à un autre réseau externe de télécommunication. En effet, un dispositif de coordination peut être simultanément connecté au réseau CPL et à un réseau internet, par exemple, par un canal de communication haut-débit (Ethernet, fibre optique, etc.). Le dispositif de coordination joue donc un rôle d'intermédiaire entre un réseau externe et le réseau CPL qu'il coordonne.

D'autres fonctions de coordination sont assurées par le dispositif coordinateur, telles que la synchronisation des échanges de données (gestion d'une horloge unique pour tous les nœuds), l'admission de nouveaux nœuds au réseau CPL, etc.

Le réseau CPL-G3 est notamment décrit dans le document « G3-PLC Alliance - G3-PLC Spécifications - CENELEC - ARIB - FCC - 2014-06: Narrowband Orthogonal Frequency Division Multiplexing Power Line Communication Transceivers for G3-PLC Networks », qui correspond au texte de la norme ITU-T G.9903. Dans cette norme, un réseau CPL est notamment appelé PAN, « Personal Area Network » pour réseau personnel en français. En outre, un dispositif coordinateur est notamment appelé « PAN coordinator », pour coordinateur PAN en français, dans la norme.

La connexion d'un nœud à un réseau CPL est utilisée par de nombreuses applications, exécutées au niveau des nœuds. Parmi ces applications, certaines applications, ci-après appelées « applications temps réel », doivent constamment échanger des données avec d'autres nœuds du réseau CPL, et notamment avec un coordinateur afin de communiquer avec un réseau externe relié à ce coordinateur.

Par exemple, pour qu'un nœud puisse assurer avec fiabilité la téléconduite d'un réseau électrique moyenne tension tel qu'un réseau HTA (pour Haute Tension A), des instructions doivent pouvoir être reçues en permanence du réseau CPL, en particulier du réseau externe via un coordinateur, au niveau du nœud. Un retard dans l'application d'instructions de téléconduite du réseau peut conduire à des phénomènes de surcharge électrique locale.

Or, les réseaux CPL actuels ne peuvent pas garantir une connexion fiable et constante entre les différents nœuds compris sur un tel réseau. En particulier, un réseau CPL est très sensible aux changements de topologie du réseau électrique sur lequel il s'appuie.

On entend par « changement de topologie du réseau électrique », toute modification intervenant sur le réseau électrique et qui soit susceptible d'avoir une incidence sur un réseau CPL s'appuyant sur le réseau électrique.

Ces changements de topologie peuvent donc conduire à une interruption, permanente ou temporaire, de la connexion de certains nœuds à un réseau CPL. Des applications exécutées par des nœuds dont la connexion au réseau est interrompue ne peuvent plus échanger de données. Dans l'exemple de la téléconduite d'un réseau HTA, une telle interruption peut par exemple conduire à ce qu'un nœud n'exécute pas une instruction de
délestage d'une partie du réseau. Si cette instruction de délestage n'est pas exécutée, les lignes du réseau électrique qui ne sont pas délestées peuvent être fortement dégradées (par fusion des matériaux d'un câble électrique par exemple).

Il existe des méthodes d'optimisation de la connexion entre les nœuds d'un réseau CPL et le dispositif coordinateur d'un tel réseau. De telles méthodes comprennent une étape de détection de la dégradation de la connexion entre le dispositif coordinateur et les nœuds du réseau CPL. Pour que les nœuds bénéficient en permanence d'une bonne connexion avec un dispositif coordinateur, ces méthodes d'optimisation proposent de changer de dispositif coordinateur quand une dégradation de la connexion est détectée.

Ainsi, quand une dégradation de la connexion entre un nœud et un dispositif coordinateur courant est détectée, un nouveau dispositif coordinateur est utilisé à la place du dispositif coordinateur courant. En particulier, pour que soit mise en place la connexion avec le nouveau dispositif coordinateur, de nombreux échanges entre le nouveau dispositif coordinateur et le nœud du réseau CPL sont prévus. Ces échanges, encore appelés « signaling » pour signalisation en français, sont prévus notamment pour que le nouveau dispositif coordinateur transmette au nœud les données requises pour l'établissement d'un canal de communication CPL entre le nœud et le nouveau dispositif coordinateur. Le signalling comporte typiquement une phase d'authentification où l'établissement de communications doit être demandé à un système d'information distant via un ou plusieurs autres liens communications, dont certains présentent une bande passante faible, comme détaillé ci-après.

Ce signaling est presque systématiquement utilisé dans le domaine des télécommunications, pas uniquement dans le domaine des télécommunications par courants porteurs en ligne, pour l'établissement d'un canal de communication.

Par ailleurs, le document US 2007/0230331 A1 décrit un procédé de handover dans un réseau CPL avec un changement de coordinateur pour des nœuds reliés par un réseau CPL. Le document EP 2 131 506 A1 concerne un procédé de connexion d'un dispositif à un réseau tel qu'un réseau CPL. En particulier, si des informations de connexion sont déjà présentes au niveau du dispositif, celui-ci se connecte directement au réseau, sinon des étapes d'appairage sont mises en œuvre.

De telles méthodes d'optimisation ne sont toutefois pas suffisamment réactives pour garantir un fonctionnement en temps réel d'applications exécutées sur un nœud dont la connectivité est dégradée. En effet, une fois la dégradation détectée, de nombreux échanges doivent être prévus entre le nouveau dispositif coordinateur et le nœud.

Les canaux de communication d'un réseau CPL sont notamment caractérisés par un débit faible. En particulier, le canal de communication temporaire utilisé pour le signaling entre le nœud et le nouveau dispositif coordinateur présente une faible bande-passante. Cette faible bande passante impose des durées importantes pour le transfert de données sur ce canal de communication temporaire. Ainsi, la durée requise pour les échanges mentionnés ci-avant (signaling) est importante, elle est de plusieurs secondes, voire plusieurs dizaines de secondes. Des telles durées ne sont pas tolérables pour des applications temps réel, telles que la téléconduite d'un réseau HTA.

La présente invention vient améliorer la situation.

A cet effet, un premier aspect de l'invention concerne un procédé de maintien de connexion d'un nœud de réseau à Courants Porteurs en Ligne - CPL, le procédé comportant un changement de raccordement dudit nœud d'un premier réseau CPL à un deuxième réseau CPL,
le premier réseau CPL étant relié à un premier dispositif coordinateur du premier réseau CPL, le deuxième réseau étant relié à un deuxième dispositif coordinateur du deuxième réseau CPL,
les premier et deuxième réseaux CPL s'appuyant sur un réseau électrique de topologie déterminée et incluant le nœud à maintenir connecté,
caractérisé en ce que le nœud est relié à une mémoire stockant une base de données comportant des enregistrements de données qu'utilise ledit nœud pour se raccorder au deuxième réseau CPL au moins,
et en ce que, sur réception d'un signal de changement de topologie du réseau électrique, le procédé comporte les étapes de :
- extraction par le nœud des données de la base de données pour se raccorder au deuxième réseau CPL ;
- lecture des données extraites pour changer de dispositif coordinateur en passant du premier dispositif coordinateur au deuxième dispositif coordinateur, pour un raccordement du nœud transféré du premier réseau CPL au deuxième réseau CPL.

Un changement de topologie du réseau électrique conduit ainsi à un changement de raccordement du nœud dans des délais très courts. En effet, dès que ce changement de topologie est détecté, un signal de changement de topologie est reçu par le nœud qui change alors instantanément de dispositif coordinateur, grâce aux données directement disponibles à partir de la base de données.

Ce changement de raccordement instantané est en effet rendu possible par la présence, au niveau du nœud, des données requises pour que le nœud soit raccordé au deuxième réseau CPL. Contrairement à ce qui est habituellement proposé (signaling), aucun échange supplémentaire n'est ainsi requis entre le nœud et le deuxième dispositif de coordination pour établir le canal de communication entre le nœud et le deuxième dispositif de coordination.

Ainsi, une connexion du nœud à un réseau CPL est maintenue en permanence, même dans le cas d'un changement de topologie du réseau électrique. Des applications temps réel peuvent donc être exécutées par le nœud sans risquer d'être interrompues par une défaillance de la connexion du nœud au réseau CPL.

Dans un mode de réalisation, les données extraites comprennent des données de chiffrement des communications entre le nœud et au moins le deuxième dispositif coordinateur et une adresse du deuxième dispositif coordinateur. Le nœud peut donc établir de manière autonome un canal de communication vers le deuxième dispositif coordinateur. D'une part, les données chiffrées par le nœud sont directement interprétables par le deuxième dispositif coordinateur. D'autre part, le nœud sait où envoyer les données ainsi chiffrées car il connait l'adresse du deuxième dispositif coordinateur.

Dans un autre mode de réalisation, sur réception du signal de changement de topologie du réseau électrique et préalablement à l'étape d'extraction, le deuxième dispositif coordinateur émet au moins audit nœud un message de notification de changement de raccordement pour être rattaché au deuxième réseau CPL. Les étapes d'extraction et de lecture des données de la base sont alors mises en œuvre par le nœud, sur réception dudit message de notification.

Une conséquence fréquente du changement de topologie du réseau électrique est d'interrompre, ou de détériorer, la connexion entre le nœud et le premier dispositif coordinateur, au moins. Ainsi, une indication de changement de topologie a plus de chance d'être reçue par le nœud si elle est envoyée par un dispositif différent du premier dispositif de coordination.

Dans un mode de réalisation, le deuxième dispositif coordinateur est relié à un réseau distinct d'un réseau CPL, par un canal de communication haut-débit. Le signal de changement de topologie est alors reçu par le deuxième dispositif coordinateur par le canal de communication haut-débit. Le canal de communication haut-débit accessible au niveau du deuxième dispositif coordinateur a pour effet de raccourcir le délai d'acheminement du signal de changement de topologie vers le deuxième dispositif coordinateur. Ainsi, le délai entre le changement de topologie et la réaction du nœud (changement de raccordement vers le deuxième dispositif coordinateur) est encore réduit.

Dans un autre mode de réalisation, le deuxième dispositif coordinateur émet à une pluralité de nœuds le message de notification. Dans ce mode réalisation, le message de notification comporte une recommandation de changement de réseau du premier réseau CPL vers le deuxième réseau CPL. Les nœuds présentement connectés au premier réseau CPL mettent alors en œuvre les étapes d'extraction et de lecture des données sur réception dudit message de notification, tandis que des nœuds non connectés au premier réseau CPL n'effectuent pas de changement de raccordement sur réception dudit message de notification. Les nœuds recevant le message de notification le transmettent alors chacun à au moins un nœud adjacent. Ainsi, le message de notification est transmis de proche en proche sans qu'une connexion directe entre un nœud et le deuxième dispositif coordinateur ne soit requise.

Dans un mode de réalisation, le procédé comporte en outre les étapes de :
- émission par le nœud d'un message de vérification de changement de raccordement à destination du deuxième dispositif coordinateur ;
- réception par le nœud d'un message d'acquittement du message de vérification, le message d'acquittement étant reçu du deuxième dispositif coordinateur pour confirmer que le changement de raccordement est effectif.

La nouvelle connexion entre le nœud et le deuxième dispositif coordinateur est donc confirmée par la réception du message d'acquittement. Le changement de raccordement est ainsi fiabilisé.

Dans un mode de réalisation, le message de vérification est réémis par le nœud lorsque le nœud ne reçoit pas de message d'acquittement pendant une durée prédéterminée après une émission précédente du message de vérification. Une durée prédéterminée est typiquement de l'ordre de la seconde, elle peut varier en fonction des paramètres du canal de communication entre le nœud et le deuxième dispositif de coordination. Le changement de raccordement se trouve encore fiabilisé par la réémission du message de vérification car cette réémission rend possible une distinction entre une erreur ponctuelle de transmission du message de vérification et une erreur de configuration du canal de communication entre le nœud et le deuxième dispositif de coordination (données de la base de données périmées par exemple).

Dans un autre mode de réalisation, les données de la base sont obtenues par le nœud et stockées dans la base à l'issue d'une procédure d'amorçage du nœud, ladite procédure étant conforme à la norme ITU-T G.9903. Le transfert des données pendant cette procédure d'amorçage réduit le coût en bande passante et en taux d'occupation du réseau car les données à transférer peuvent être intégrées aux échanges intervenant classiquement pendant la procédure d'amorçage.

Dans un mode de réalisation, le changement de topologie correspond à l'un au moins des cas parmi une rupture de la continuité électrique d'au moins une partie du réseau électrique, une rupture de l'alimentation en électricité d'au moins une partie du réseau électrique, et/ou une modification de la puissance électrique véhiculée par au moins une partie du réseau électrique. Ces phénomènes sont susceptibles d'interrompre ou de dégrader le canal de communication entre le premier dispositif de coordination et le nœud. Il est donc particulièrement intéressant de prévoir un changement de raccordement dans ces situations.

Dans un autre mode de réalisation, le signal de changement de topologie du réseau électrique signale une détérioration du canal de communication du premier réseau CPL entre le premier dispositif coordinateur et le nœud. Ainsi, le changement de raccordement peut avoir pour conséquence de maintenir une connexion fonctionnelle du nœud à un réseau CPL.

Un deuxième aspect de l'invention vise un programme informatique comportant des instructions pour la mise en œuvre du procédé selon le premier aspect de l'invention, lorsque ces instructions sont exécutées par un processeur.

Un troisième aspect de l'invention vise un système de télécommunication par Courants Porteurs en Ligne, CPL, apte à maintenir une connexion d'un nœud à un réseau CPL, le maintien de la connexion étant assuré par un changement de raccordement dudit nœud d'un premier réseau CPL à un deuxième réseau CPL. Les premier et deuxième réseaux CPL s'appuient alors sur un réseau électrique de topologie déterminée et incluant le nœud à maintenir connecté et le système étant caractérisé en ce qu'il comporte :
- un premier dispositif coordinateur relié au premier réseau CPL pour coordonner le premier réseau CPL,
- un deuxième dispositif coordinateur relié au deuxième réseau CPL pour coordonner le deuxième réseau CPL,
- le nœud apte à maintenir une connexion, comportant :
   ∘ une mémoire stockant une base de données comportant des enregistrements de données qu'utilise ledit nœud pour se raccorder au deuxième réseau CPL au moins ;
   ∘ un processeur agencé pour effectuer, sur réception d'un signal de changement de topologie du réseau électrique, les étapes de :
      ▪ extraction par le nœud des données de la base de données pour se raccorder au deuxième réseau CPL ;
      ▪ lecture des données extraites pour changer de dispositif coordinateur en passant du premier dispositif coordinateur au deuxième dispositif coordinateur, pour un raccordement du nœud transféré du premier réseau CPL au deuxième réseau CPL.

Un quatrième aspect de l'invention concerne un nœud d'un réseau électrique, comportant un circuit pour établir une connexion à au moins un premier réseau à Courants Porteurs en Ligne - CPL, caractérisé en ce qu'il comporte :
- une connexion à une mémoire stockant une base de données comportant des enregistrements de données permettant un raccordement à un deuxième réseau CPL au moins ;
- un processeur agencé pour effectuer, sur réception d'un signal de changement de topologie du réseau électrique, les étapes de :
   - extraction par le nœud des données permettant le raccordement dudit nœud au deuxième réseau CPL ;
   - lecture des données extraites pour passer d'un premier dispositif coordinateur du premier réseau CPL à un deuxième dispositif coordinateur du deuxième réseau CPL, pour un raccordement du nœud transféré du premier réseau CPL au deuxième réseau CPL.

D'autres caractéristiques et avantages de l'invention apparaîtront à l'examen de la description détaillée ci-après, et des dessins annexés sur lesquels:
- la figure 1 illustre un nœud et deux réseaux CPL, selon un mode de réalisation de l'invention ;
- la figure 2 illustre un contexte de mise en œuvre de l'invention, selon un mode de réalisation de l'invention ;
- la figure 3A est un diagramme illustrant les étapes d'un procédé de changement de raccordement, selon un mode de réalisation de l'invention ;
- la figure 3B est un diagramme illustrant les étapes d'un procédé de changement de raccordement, selon un autre mode de réalisation de l'invention ;
- la figure 4 est un diagramme illustrant les étapes d'un procédé d'amorçage conforme à la norme ITU-T G.9903, selon un mode de réalisation de l'invention ;
- la figure 5 illustre un nœud du réseau CPL, selon un mode de réalisation de l'invention ;
- la figure 6A présente la structure d'un message de renseignement d'une base de données, selon un mode de réalisation de l'invention ;
- la figure 6B présente la structure d'un message de notification de changement de raccordement, selon un mode de réalisation de l'invention.

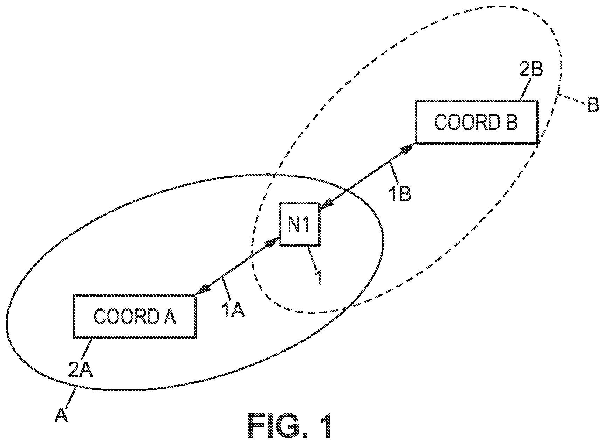

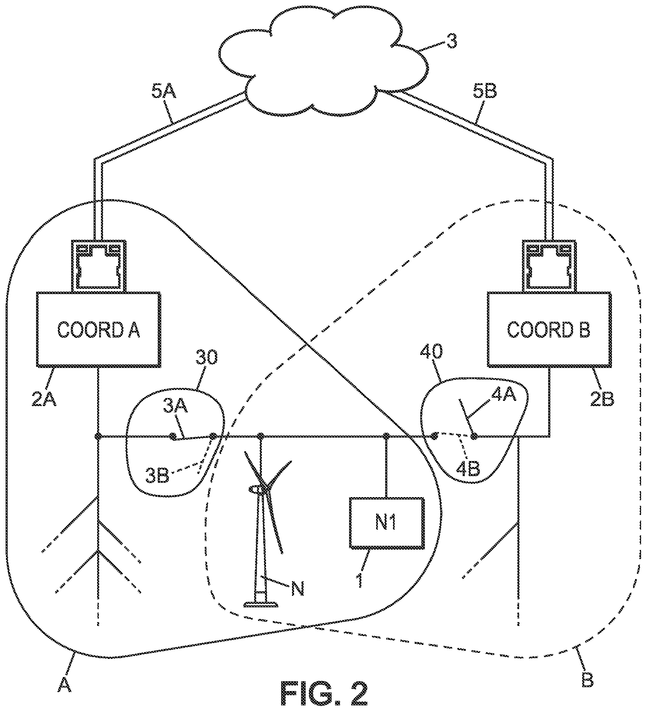

La **figure 1** représente un premier réseau CPL A, coordonné par un premier dispositif coordinateur COORD A, référencé 2A sur la figure 1, et relié à un nœud N1, référencé 1, par un canal de communication 1A. La figure 1 représente également un deuxième réseau CPL B, avec un deuxième dispositif coordinateur COORD B, référencé 2B, relié au nœud N1 par un canal de communication 1B. Dans un mode de réalisation détaillé ci-après en référence à la figure 2, le canal de communication 1A fonctionne quand le canal de communication 1B ne fonctionne pas et, inversement, le canal de communication 1B fonctionne quand le canal de communication 1A ne fonctionne pas.

Comme expliqué ci-après, un changement de topologie d'un réseau électrique sur lequel s'appuient les deux réseaux CPL peut conduire à une dégradation du canal de communication 1A. Pour que les effets de cette dégradation soient réduits au maximum pour une application exécutée par le nœud N1, l'invention prévoit un changement de raccordement du nœud N1, du premier réseau A vers le deuxième réseau B.

La **figure 2** illustre un réseau électrique relié aux coordinateurs COORD A et COORD B, selon un mode de réalisation de l'invention. Les coordinateurs COORD A et COORD B sont en outre connectés à un réseau de télécommunication 3, par des canaux de communication haut-débits (l'exemple d'une connexion par des prises Ethernet est représenté sur la figure 2), respectivement 5A et 5B.

Le réseau électrique sur lequel s'appuie les réseaux CPL A et B est représenté par l'ensemble des branches situé sous les coordinateurs COORD A et COORD B sur la figure 2. Il s'agit préférentiellement d'un réseau de distribution d'électricité mais il peut également s'agir de tout réseau électrique comme un réseau électrique domestique, un réseau électrique compris dans un dispositif quelconque, etc. Le réseau électrique peut servir à véhiculer un courant électrique haute tension (on parle alors de réseau HTA, comme mentionné en introduction) ou un courant électrique basse tension (on parle alors de réseau BT).

Ce réseau électrique comporte des branches, typiquement constituées de câbles d'un matériau conducteur, tel que du cuivre, reliant des équipements. Ces équipements sont typiquement des dispositifs utilisés pour la distribution de l'électricité, tel que des capteurs, actionneurs, des transformateurs, des usines de production décentralisée d'électricité, etc.

Ces équipements peuvent être confondus avec des nœuds des réseaux CPL, tel que les nœuds N1 et N représentés sur la figure 2. Dans cette situation, les équipements du réseau électrique sont connectés au réseau 3, via un raccordement à l'un des réseaux CPL A et/ou B. Il est également possible que des nœuds de l'un au moins des réseaux CPL ne soit pas un équipement du réseau électrique, par exemple dans la situation où un nœud CPL est un capteur mobile relié à une branche du réseau électrique. Il est aussi possible qu'un équipement du réseau électrique ne soit pas un nœud d'un réseau CPL.

La figure 2 illustre, dans sa partie basse, des arborescences représentant des parties du réseau électrique non représentées en entier. Ces arborescences illustrent la diversité des sous-réseaux électriques qui peuvent être reliés au réseau électrique.

Le réseau électrique présente, à un instant donné, une topologie déterminée. La figure 2 donne un exemple de deux topologies différentes à deux instants différents.

A un premier instant, un interrupteur 30 est dans une position fermée 3A et un interrupteur 40 est dans une position ouverte 4A. Ainsi, à ce premier instant, la topologie du réseau électrique est telle qu'il existe une continuité électrique entre le coordinateur 2A et le nœud N1 mais pas de continuité électrique entre le coordinateur 2B et le nœud N1.

A un deuxième instant, l'interrupteur 30 est ouvert dans une position 3B et l'interrupteur 40 est fermé dans une position 4B. On est en présence d'un changement de topologie du réseau électrique. En effet, il n'existe plus, au deuxième instant, de liaison électrique continue entre le nœud N1 et le coordinateur COORD A mais il existe désormais une liaison électrique entre le nœud N1 et le coordinateur COORD B. Comme cela est décrit ci-après, l'invention propose de changer le raccordement du nœud N1 du coordinateur COORD A vers le coordinateur COORD B dans cette situation.

La connexion des coordinateurs COORD A et COORD B au réseau de télécommunication 3 via des canaux de communication haut-débit, respectivement 5A et 5B, est assurée par au moins un câble Ethernet, une connexion à la fibre optique, un lien radiofréquence, etc. Le réseau de télécommunication 3 est par exemple le réseau internet, un réseau local interne à une entreprise de distribution d'électricité, etc.

Le réseau de télécommunication 3 comprend par exemple des systèmes d'informations utilisés pour des applications de téléconduite ou de comptage d'un réseau de distribution d'électricité. Dans le cas d'un système d'information de téléconduite, des instructions sont envoyées via les réseaux CPL A et/ou B du réseau 3 vers les nœuds N1 et N, par exemple. Pour l'application de comptage, les nœuds des réseaux CPL sont utilisés pour remonter des informations de comptage à un système d'information de comptage compris dans le réseau 3.

Une architecture particulière pour les réseaux CPL A et B, appelée « backbone CPL G3 HTA », repose sur une branche, appelée épine dorsale, d'un réseau HTA commune à plusieurs sous-réseaux BT (alors appelé réseau NAN, pour « Neighbourhood Area Network », réseau de voisinage en français) et/ou HTA (alors appelé réseau FAN, pour « Field Area Network », réseau de champs en français).

Les sous-réseaux FAN et NAN sont respectivement reliés à l'épine dorsale par des « FAN Border Routers » (FAN BR pour FAN routeur frontière) et des « NAN Border Routers » (NAN BR pour NAN routeur frontière). Les FAN BR et les NAN BR sont également des coordinateurs des sous-réseaux CPL s'appuyant sur les sous-réseaux FAN et NAN. L'épine dorsale HTA comporte également des équipements, tels qu'actionneurs, capteurs, compteurs ou encore OMT, pour Organes Manœuvrables Télécommandés.

Les sous-réseaux FAN et NAN ainsi que les équipements de l'épine dorsale HTA communiquent avec les systèmes d'informations compris sur le réseau 3 via au moins un dispositif coordinateur d'un réseau CPL s'appuyant sur l'épine dorsale HTA.

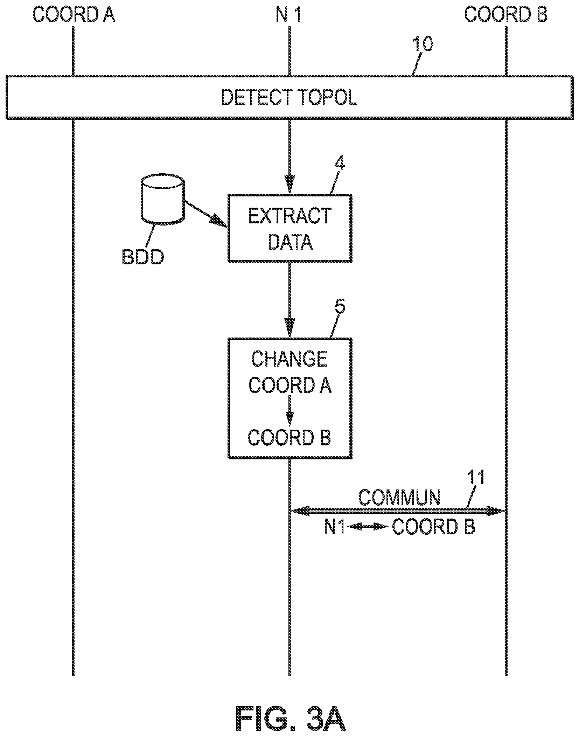

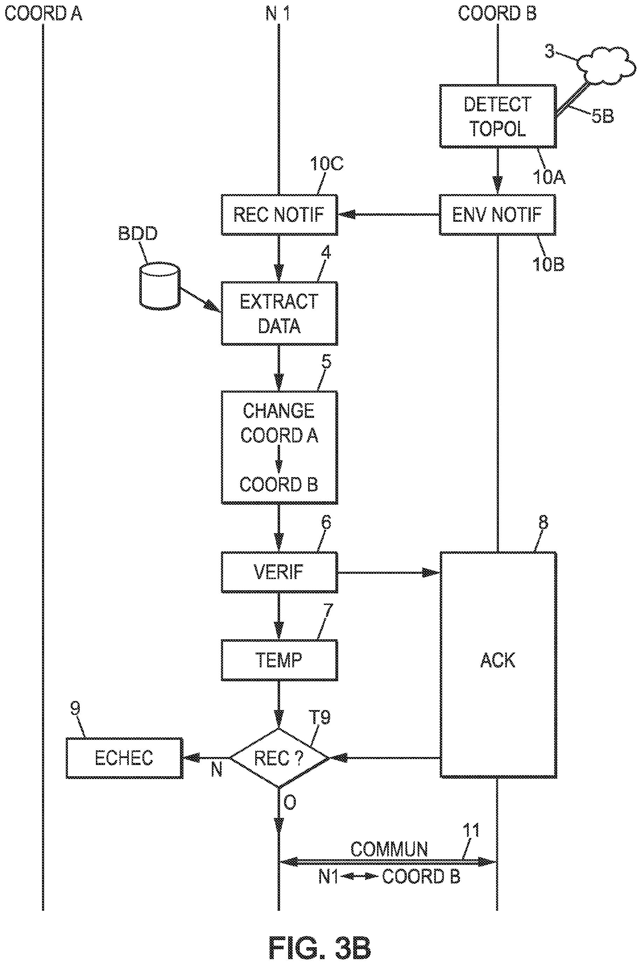

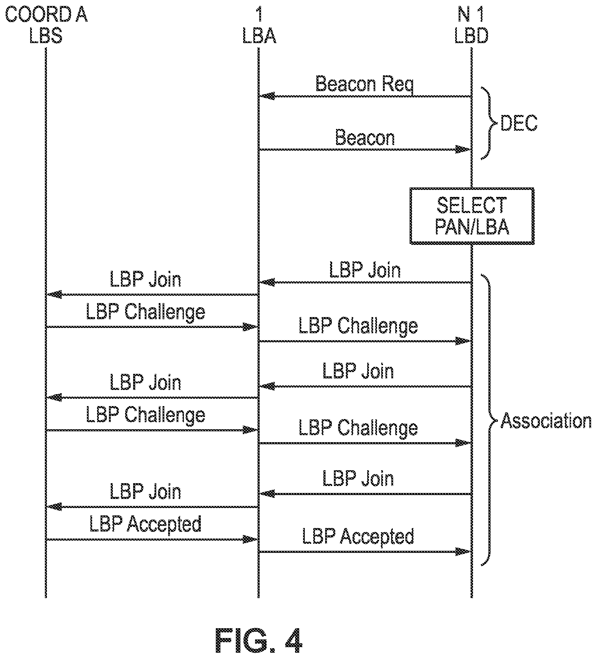

Un procédé de maintien de la connexion du nœud N1 à un réseau CPL est maintenant décrit en référence aux figures 3A, 3B et 4.

Pour maintenir la connexion du nœud à un réseau CPL, le procédé selon un mode de réalisation prévoit trois stades.

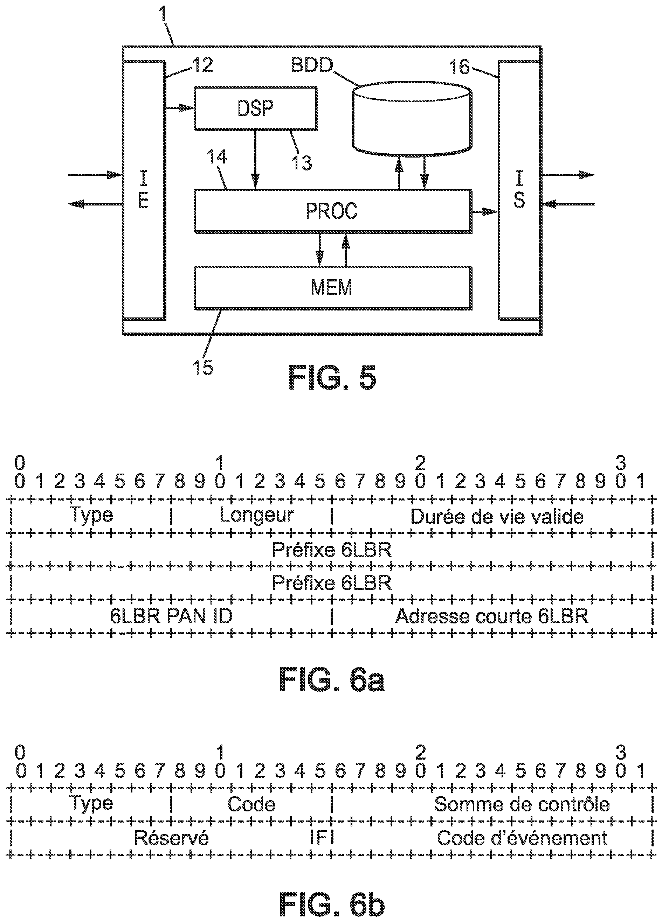

Le premier stade, dit de « early provisioning » pour provisionnement anticipé en français, comporte des étapes visant à compléter une base de données accessible au niveau de chaque nœud, préalablement au changement de raccordement du nœud. La base de données, ci-après référencée BDD aux figures 3A, 3B et 5, est comprise sur une mémoire connectée au nœud N1.

Le deuxième stade, dit de « reconfiguration détection » pour détection de reconfiguration en français, relève de la détection du changement de topologie du réseau électrique.

Le troisième stade, dit « joining a new PAN » pour association à un nouveau PAN en français, correspond aux étapes de changement de raccordement du nœud N1 au deuxième coordinateur COORD B.

Pour limiter le signaling lors du changement de raccordement et ainsi réduire au maximum le temps requis pour que ce changement de raccordement soit effectif, le stade d'early provisioning prévoit de transmettre en avance les données qu'utilise le nœud pour se raccorder au deuxième coordinateur COORD B, au moins.

Ce stade d'early provisioning est avantageusement compris dans une procédure d'amorçage du réseau CPL. Cette procédure d'amorçage, définie notamment par la norme ITU-T G.9903, et en particulier en référence à la procédure d'amorçage 6LoWPAN définie au point 9.4.4.2.2 de cette norme, a pour objet la découverte, à partir d'un premier coordinateur COORD A, de nœuds reliés par un réseau électrique. Une fois les nœuds découverts, ces nœuds sont raccordés au premier coordinateur COORD A selon la procédure d'amorçage décrite ci-après en référence à la **figure 4** et décrite au point 9.4.4.2.2 de la norme ITU-T G.9903.

La procédure d'amorçage est ici décrite entre le nœud N1, appelé LBD pour « LoWPAN Bootstrap Device » (dispositif d'amorçage LoWPAN en français) dans la norme ITU-T G.9903, et le coordinateur COORD A, appelé LBS pour « LoWPAN Bootstrap Server » (serveur d'amorçage LoWPAN en français) dans la norme ITU-T G.9903, via le nœud N, appelé LBA pour « LoWPAN Bootstrap Agent » (agent d'amorçage LoWPAN en français) dans la norme ITU-T G.9903, jouant le rôle d'intermédiaire entre le nœud N1 et le coordinateur COORD A.

Le nœud N1 cherchant à rejoindre un réseau CPL découvre son environnement à travers la transmission d'une trame « Beacon Req », pour requête de balise en français.

Les nœuds CPL répondent à travers la transmission d'une trame « Beacon », pour balise en français, comportant toutes les informations nécessaires pour que le nœud N1 puisse tenter une association avec le réseau CPL de son choix, soit l'adresse MAC, pour Media Access Control (adresse physique en française), longue (64 bits) du nœud transmetteur du beacon (ici le nœud N) et son PAN ID (identifiant du réseau CPL auquel est raccordé le nœud N).

Suite à la procédure précédente de découverte dite « active scan » (scan actif en français), le nœud N1 choisit (étape SELECT PAN/LBA sur la figure 4) un réseau CPL parmi la liste de PAN ID établie, puis choisit le meilleur nœud CPL à travers lequel s'associer.

Le nœud N1 amorce la procédure d'association LBP, pour « LoWPAN Bootstrap Protocol » (protocole d'amorçage LoWPAN en français), en envoyant une requête « LBP Join » au nœud CPL précédemment sélectionné, ici le nœud N, qui le fait suivre au coordinateur COORD A.

Le coordinateur COORD A répond au nœud N1 via le nœud N à travers la transmission d'une trame « LBP Challenge » comportant des éléments permettant l'authentification mutuelle du COORD A et du nœud N1.

Une fois la phase d'authentification terminée et réussie, le coordinateur COORD A accepte le nœud N1 au sein de son réseau CPL par l'envoi d'une trame « LBP Accepted ». Le coordinateur COORD A fourni alors au nœud N1 les données permettant de communiquer au sein du réseau CPL coordonné par le coordinateur COORD A. Ces données correspondent à son adresse MAC courte (16 bits) et la clé de chiffrement « GMK », pour Group Master Key (clé maître absolue en français), commune à tous les nœuds CPL du réseau.

Le procédé selon un mode de réalisation de l'invention propose alors d'ajouter aux informations transmises par le coordinateur COORD A au nœud N1 les données qu'utilise le nœud N1 pour se raccorder au deuxième coordinateur COORD B, au moins.

Les données qu'utilise le nœud N1 pour se raccorder au deuxième coordinateur COORD B comprennent des données de chiffrement des communications entre le nœud N1 et le deuxième coordinateur COORD B et une adresse du deuxième coordinateur COORD B.

Les données de chiffrement des communications entre le nœud N1 et le deuxième coordinateur COORD B comportent au moins une clé GMK pour chiffrer les communications au sein du deuxième réseau CPL B coordonné par le deuxième coordinateur COORD B. En particulier, les attributs décrits dans le tableau ci-dessous étendent la liste des paramètres de configuration donnés au paragraphe 9.4.4.2.1.3 de la norme ITU-T G.9903 :

| Attribut | Attr_ID (identifiant de l'attribut) | Type | Description de l'attribut |
|---|---|---|---|
| GMK-alt | 13 | P | Fournit la clé GMK. Sur réception, la clé est stockée dans la base de données BDD du nœud N1. |
| | | | L'attribut est constitué des champs suivants : |
| | | | - PAN ID (2 bytes) : identifiant du réseau CPL B ; |
| | | | - Id (1 byte) : identifiant de clé ; |
| | | | - GMK (16 bytes) : valeur de la clé GMK courante. |
| GMK-alt-activation | 14 | P | Indique la clé GMK à utiliser pour les messages sortant à destination de COORD B |
| | | | L'attribut est constitué des champs suivants : |
| | | | - PAN ID (2 bytes) : identifiant du réseau CPL B ; |
| | | | - Id (1 byte) : identifiant de clé. |
| GMK-alt-removal | 16 | P | Indique la clé GMK à supprimer pour un autre dispositif de coordination. |
| | | | L'attribut est constitué des champs suivants : |
| | | | - PAN ID (2 bytes) : identifiant du réseau CPL B ; |
| | | | - Id (1 byte) : identifiant de clé. |

L'adresse du deuxième coordinateur COORD B est une adresse IPv6, transmise à l'aide d'une option APO, pour « Alternate PAN Option » (option de PAN alternatif en français), par un message « ICMP (pour Internet Control Message Protocol, protocole de messages de contrôle internet en français) Router Advertisement », pour mention routeur ICMP en français, selon le protocole « Neighbor Discovery for IPv6 (RFC 4861) », pour découverte des voisins pour l'IPv6 en français.

Les champs d'une option APO donnée sont décrits dans le tableau suivant :

| Champ | Longueur | Valeur par défaut | Description |
|---|---|---|---|
| Type (« Type » en anglais) | 8 bits | 253 | Comme mentionné dans RFC 4727, les valeurs de type 253 et 254 sont réservées pour des objectifs expérimentaux |
| Longueur (« Length » en anglais) | 8 bits | 2 | Longueur en unités de 8 octets |
| Durée de vie valide (« Valid Lifetime » en anglais) | 16 bits | variable | Durée en minutes pendant laquelle les données transmises à l'aide de l'option APO sont valides |
| Préfixe 6LBR (« 6LBR Prefix » en anglais) | 64 bits | variable | Préfixe IPv6 du 6LBR (correspondant au coordinateur, COORD B ici) pour l'option APO donnée |
| 6LBR PAN ID | 16 bits | variable | PAN ID du 6LBR pour l'option APO donnée |
| Adresse courte 6LBR (« 6LBR Short Address » en anglais) | 16 bits | variable | Adresse courte du 6LBR pour l'option APO donnée |

La répartition de ces champs au sein d'un message ICMP Router Advertisement est représentée à la **figure 6A****.**

Les options APO sont transmises aux nœuds CPL par des messages ICMP Router Advertisement non seulement à la suite de la phase d'amorçage décrite ci-avant mais aussi pendant les opérations de maintenance du PAN.

Des données pour le raccordement à d'autres dispositifs coordinateurs accessibles depuis le nœud N1 peuvent également être transmises à ce stade d'early provisioning. Un nœud CPL doit ainsi maintenir une table « Alternate PAN » (PAN alternatif en français) dans la base de données BDD regroupant l'ensemble des informations relatives aux coordinateurs adjacents accessibles depuis le nœud. Chaque entrée de la table, correspondant aux informations propres à un réseau CPL adjacent, doit comporter : le PAN ID, la clé GMK utilisée, l'adresse IPv6 du coordinateur CPL, le temps de validité de l'entrée et un booléen indiquant si le nœud CPL est actuellement associé audit réseau CPL adjacent.

Le deuxième stade, dit de « reconfiguration détection », couvre la détection du changement de topologie et la diffusion d'un signal de changement de topologie.

La **figure 3A** illustre les étapes du procédé de maintien de la connexion du nœud N1, selon un mode de réalisation.

A une étape 10, intervenant postérieurement aux étapes décrite ci-avant pendant le stade d'early provisioning, un changement de topologie est détecté. Le changement de topologie du réseau électrique correspond à un événement susceptible de modifier au moins une caractéristique d'un canal de communication CPL s'appuyant sur ce réseau électrique. Ainsi, des évènements tels qu'une rupture de la continuité électrique d'au moins une partie du réseau électrique (câble électrique sectionné, ouverture d'un interrupteur, etc.), une rupture de l'alimentation en électricité d'au moins une partie du réseau électrique (extinction d'une centrale électrique, ouverture d'un interrupteur en amont, etc.), une modification de la puissance électrique véhiculée par au moins une partie du réseau électrique (modification du facteur de charge sur une branche du réseau, augmentation de la demande en énergie électrique pendant une période de grand froid, etc.) sont susceptibles d'avoir une incidence sur le réseau CPL. Comme mentionné ci-après en référence à la figure 3B, ce changement de topologie peut être signalé au nœud N1 de différentes manières.

Une fois le changement de topologie détecté et signalé au nœud N1, une étape 4 d'extraction depuis la base de données BDD de données pour se raccorder au deuxième dispositif coordinateur COORD B est mise en œuvre par le nœud N1. Ces données sont extraites de la table Alernate PAN remplie pendant l'étape d'early provisioning décrite ci-avant.

A partir de ces données, le nœud N1 change à une étape 5 de coordinateur, pour passer du premier coordinateur COORD A au deuxième coordinateur COORD B. Ce changement de coordinateur comprend une mise à jour d'un champ indiquant le coordinateur courant du nœud, ce champ étant stocké dans une mémoire reliée au nœud N1.

Suite à ce changement de coordinateur, le nœud N1 peut échanger, à une étape 11, des communications avec le deuxième coordinateur COORD B.

La **figure 3B** détaille un procédé de maintien de la connexion du nœud N1, selon un autre mode de réalisation.

Dans cet autre mode de réalisation, la détection du changement de topologie du réseau électrique est faite au niveau du réseau 3, relié au deuxième coordinateur par le canal de communication haut-débit 5B. En effet, le réseau 3 peut comporter un système d'information ayant pour fonction de maintenir à jour une information de topologie du réseau électrique. Certains équipements (par exemple un OMT), une équipe d'opérateurs en charge de la surveillance du réseau électrique ou encore des instructions intervenant à périodes fixes peuvent indiquer au système d'information qu'un changement de topologie est intervenu. Un signal de changement de topologie est alors reçu à une étape 10A au niveau du deuxième dispositif coordinateur COORD B.

A une étape 10B, le deuxième coordinateur COORD B envoi alors un message de notification NOTIF au moins à destination du nœud N1. Le message de notification NOTIF est encore appelé message « ICMP Grid Event », pour message ICMP d'événement de réseau en français. Le caractère ponctuel de l'émission du message de notification évite une signalisation périodique qui encombrerait inutilement le réseau.

Le message de notification est envoyé en mode « broadcast » (pour diffusion en français) à tous les nœuds accessibles depuis COORD B via le réseau électrique. Ce message est diffusé de proche en proche, depuis COORD B vers les nœuds adjacents à COORD B, puis des nœuds adjacents à COORD B vers les nœuds adjacents aux nœuds adjacents à COORD B, etc.

En variante, le message de notification est reçu d'un coordinateur différent de celui vers lequel le nœud change de raccordement (COORD B ici). Dans une autre variante, le message de notification est reçu par une connexion du nœud autre qu'une connexion à un réseau CPL.

Les champs du message de notification NOTIF sont détaillés dans le tableau ci-dessous :

| Champ | Longueur | Valeur par défaut | Description |
|---|---|---|---|
| Type (« Type » en anglais) | 8 bits | 100 | Comme mentionné dans la norme RFC 4443, les valeurs de type 100, 101, 200 et 201 sont réservées pour des objectifs expérimentaux |
| Code (« Code » en anglais) | 8 bits | 0 | Le champ Code est inutilisé pour ce type de message de notification |
| Somme de contrôle (« Checksum » en anglais) | 16 bits | variable | Ce champ est défini dans la norme RFC 4443 |
| Réservé (« Reserved » en anglais) | 15 bits | 0 | Ce champ n'est pas utilisé |
| F | 1 bit | variable | Ce drapeau indique que le message de notification a été généré par un nœud qui vient juste de rejoindre le deuxième réseau CPL coordonné par COORD B (cas où le message de notification a transité par un autre nœud avant d'arriver au nœud N1) |
| Code d'événement réseau (« Grid Event Code » en anglais) | 16 bits | variable | Ce champ de 16 bits est utilisé pour donner plus d'informations à propos du changement de topologie : |
| | | | - 0x0000 signale un changement de topologie |
| | | | - 0x0001 à 0xFFFF sont réservés pour d'autres utilisations |

La répartition de ces champs au sein d'un message de notification NOTIF est représentée à la **figure 6B****.**

Sur réception, à l'étape 10C, du message de notification NOTIF, les étapes 4 et 5 décrites ci-avant en référence à la figure 3A sont mises en œuvre. En particulier, le message de notification comporte un préambule indiquant qu'il provient d'un coordinateur différent du coordinateur normalement enregistré pour le nœud N1 (le message NOTIF vient de COORD B, alors que N1 est, à cet instant, coordonné à COORD A). Le nœud N1 va détecter, au moyen d'une primitive de niveau MAC, appelée « MLME-COM-STATUS.indication », définie par la norme ITU-T G.9903 au point 9.3.3, que le message de notification comprend un préambule non-conforme au dispositif coordinateur auquel il est, à cet instant, raccordé.

Dans un mode de réalisation, la primitive MLME-COM-STATUS.indication n'est pas mise en œuvre lorsque le message de notification NOTIF est reçu par un nœud d'un coordinateur qui coordonne déjà ce nœud. Ici, si le message de notification NOTIF était reçu du coordinateur COORD A, ce message de notification ne serait pas pris en compte car non détecté par la primitive MLME-COM-STATUS.indication. Dans le cas où le message de notification NOTIF est reçu d'un coordinateur ne coordonnant pas déjà le nœud, la primitive MLME-COM-STATUS.indication signifie au nœud N1 le message « ALTERNATE_PANID_DETECTION » afin que le nœud procède aux étapes suivantes de changement de raccordement.

En outre, une comparaison peut être réalisée pour vérifier si le message de notification NOTIF provient d'un coordinateur référencé dans la table alternate PAN. Cette vérification est notamment effectuée pour des raisons de cybersécurité.

A une étape 6, avec laquelle débute le stade dit « joining a new PAN », le nœud N1 émet un message de vérification de changement de raccordement à destination de COORD B. Ce message de vérification est envoyé au moyen des données stockées dans la table alternate PAN : il est chiffré au moyen de la clé GMK stocké dans la table alternate PAN pour le réseau CPL B, il est envoyé à destination de l'adresse de COORD B stockée dans la table alternate PAN, etc. Ce message peut également être envoyé à partir d'autres données, ou partiellement à partir des données stockées dans la table alternate PAN.

Sur réception du message de vérification, le deuxième coordinateur COORD B génère et émet un message d'acquittement du message de vérification à une étape 8. Le coordinateur COORD B ajoute le nœud (ici N1) à partir duquel est reçu le message de vérification à une liste des nœuds qu'il coordonne, cette liste étant stockée dans une mémoire connectée au coordinateur COORD B. Le coordinateur COORD B notifie également un système d'information compris dans le réseau 3 du changement de raccordement du nœud N1.

Une temporisation est simultanément mise en œuvre pendant une durée prédéterminée à l'étape 7 au niveau du nœud N1 pour que soit pris en compte le traitement du message de vérification par le deuxième coordinateur COORD B. Cette durée prédéterminée est typiquement de l'ordre de la seconde.

La structure des messages de vérification et de confirmation reprend des champs définis par la norme ITU-T G.9903 pour les messages échangés selon le protocole LBP. Ces champs sont présentés dans le tableau ci-dessous pour le message de vérification et le message d'acquittement :

| Message\Champ | T | Code | Message LBD |
|---|---|---|---|
| Vérification | 0 | 0b101 | NOTIFICATION |
| Acquittement | 1 | 0b101 | ACK |

Un test T9 est alors effectué par le nœud N1 pour confirmer que le message d'acquittement a bien été reçu et que le changement de raccordement est donc effectif. Si le message n'a pas été reçu, un message d'échec est généré à une étape 9. Lors de l'étape d'échec, il est possible de prévoir un nouvel essai d'envoi d'un message de vérification. Sinon, le nœud N1 peut échanger, à une étape 11, des communications avec le deuxième coordinateur COORD B.

La **figure 5** représente un exemple de nœud, tel que le nœud 1, mais aussi tel qu'un dispositif coordinateur comme le coordinateur COORD A et/ou le coordinateur COORD B. Ce nœud peut prendre la forme d'un boitier comprenant des circuits imprimé, de tout type d'ordinateur, d'un équipement intégré dans le réseau électrique.

Le nœud comprend une mémoire vive 15 pour stocker des instructions pour la mise en œuvre par un processeur 14 du procédé décrit ci-avant en référence aux figures 3A, 3B et 4, notamment. Le nœud comporte aussi, dans un mode de réalisation, une mémoire de masse stockant la base de données BDD, par exemple pour le stockage des données utilisées pour le raccordement du nœud N1 au deuxième coordinateur COORD B, de la table alternate PAN, etc. Dans le cas des coordinateurs COORD A et COORD B, la base de données BDD comporte des informations telles que la liste des nœuds coordonnés.

Le nœud peut en outre comporter un processeur de signal numérique (DSP) 13. Ce DSP 13 reçoit les messages reçus par le nœud pour mettre en forme, démoduler et amplifier, de façon connue en soi ces messages.

Le nœud comporte également une interface d'entrée 12, par exemple pour la réception du message de notification NOTIF, et une interface de sortie 16, par exemple pour la transmission du message de vérification.

La présente invention ne se limite pas aux formes de réalisation décrites ci-avant à titre d'exemples ; elle s'étend à d'autres variantes.

Ainsi, on a décrit ci-avant un mode de réalisation dans lequel un changement de raccordement du nœud N1 était effectué sur détection d'un changement de topologie du réseau électrique. L'invention n'est pas uniquement limitée à un changement de topologie du réseau électrique mais s'étend à toute modification susceptible de modifier au moins une caractéristique du canal de communication entre le nœud N1 et le premier dispositif coordinateur COORD A.

## Revendications

1. Procédé de maintien de connexion d'un nœud (1) de réseau à Courants Porteurs en Ligne - CPL, le procédé comportant un changement de raccordement dudit nœud d'un premier réseau CPL (A) à un deuxième réseau CPL (B),
le premier réseau CPL étant relié à un premier dispositif coordinateur (2A) du premier réseau CPL, le deuxième réseau étant relié à un deuxième dispositif coordinateur (2B) du deuxième réseau CPL,
les premier et deuxième réseaux CPL s'appuyant sur un réseau électrique de topologie déterminée et incluant le nœud (1) à maintenir connecté,
le nœud étant relié à une mémoire stockant une base de données (BDD) comportant des enregistrements de données qu'utilise ledit nœud pour se raccorder au deuxième réseau CPL au moins,
et en ce que, sur réception d'un signal de changement de topologie du réseau électrique, le procédé étant **caractérisé par** les étapes de :
- extraction (4) par le nœud des données de la base de données pour se raccorder au deuxième réseau CPL, les données extraites comprenant des données de chiffrement des communications entre le nœud et au moins ledit deuxième dispositif coordinateur, et une adresse du deuxième dispositif coordinateur ;
- lecture (5) des données extraites pour changer de dispositif coordinateur en passant du premier dispositif coordinateur au deuxième dispositif coordinateur, pour un raccordement du nœud transféré du premier réseau CPL au deuxième réseau CPL.

2. Procédé selon la revendication 1, **caractérisé en ce qu'**il comporte en outre, préalablement à l'étape d'extraction, l'étape de :
- sur réception du signal de changement de topologie du réseau électrique (10A), le deuxième dispositif coordinateur émet (10B) au moins audit nœud un message de notification de changement de raccordement pour être rattaché au deuxième réseau CPL,
et **en ce que** les étapes d'extraction et de lecture des données de la base sont mises en œuvre par le nœud, sur réception (10C) dudit message de notification.

3. Procédé selon la revendication 2, dans lequel le deuxième dispositif coordinateur est relié à un réseau (3) distinct d'un réseau CPL, par un canal de communication haut-débit (5B),
**caractérisé en ce que** le signal de changement de topologie est reçu par le deuxième dispositif coordinateur par le canal de communication haut-débit.

4. Procédé selon l'une des revendications 2 et 3, **caractérisé en ce que** :
- le deuxième dispositif coordinateur émet à une pluralité de nœuds le message de notification,
- le message de notification comporte une recommandation de changement de réseau du premier réseau CPL vers le deuxième réseau CPL, et
- des nœuds présentement connectés au premier réseau CPL mettent en œuvre les étapes d'extraction et de lecture des données sur réception dudit message de notification, tandis que des nœuds non connectés au premier réseau CPL n'effectuent pas de changement de raccordement sur réception dudit message de notification,
les nœuds recevant le message de notification le transmettant chacun à au moins un nœud adjacent.

5. Procédé selon l'une des revendications précédentes, **caractérisé en ce que** le procédé comporte en outre les étapes de :
- émission (6) par le nœud d'un message de vérification de changement de raccordement à destination du deuxième dispositif coordinateur ;
- réception (T9) par le nœud d'un message d'acquittement dudit message de vérification, le message d'acquittement étant reçu du deuxième dispositif coordinateur pour confirmer que le changement de raccordement est effectif.

6. Procédé selon la revendication 5, **caractérisé en ce que** le message de vérification est réémis par le nœud lorsque le nœud ne reçoit pas de message d'acquittement pendant une durée prédéterminée après une émission précédente du message de vérification.

7. Procédé selon l'une des revendications précédentes, **caractérisé en ce que** les données de la base sont obtenues par le nœud et stockées dans la base à l'issue d'une procédure d'amorçage du nœud, ladite procédure étant conforme à la norme ITU-T G.9903.

8. Procédé selon l'une des revendications précédentes, **caractérisé en ce que** le changement de topologie correspond à l'un au moins des cas parmi :
- une rupture de la continuité électrique d'au moins une partie du réseau électrique ;
- une rupture de l'alimentation en électricité d'au moins une partie du réseau électrique ;
- une modification de la puissance électrique véhiculée par au moins une partie du réseau électrique.

9. Procédé selon l'une des revendications précédentes, **caractérisé en ce que** le signal de changement de topologie du réseau électrique signale une détérioration du canal de communication du premier réseau CPL entre le premier dispositif coordinateur et le nœud.

10. Programme informatique comportant des instructions pour la mise en œuvre du procédé selon l'une quelconque des revendications précédentes, lorsque ces instructions sont exécutées par un processeur (14).

11. Système de télécommunication par Courants Porteurs en Ligne, CPL, apte à maintenir une connexion d'un nœud (1) à un réseau CPL, le maintien de la connexion étant assuré par un changement de raccordement dudit nœud d'un premier réseau CPL (A) à un deuxième réseau CPL (B),
les premier et deuxième réseaux CPL s'appuyant sur un réseau électrique de topologie déterminée et incluant le nœud à maintenir connecté,
le système comportant :
- un premier dispositif coordinateur (2A) relié au premier réseau CPL pour coordonner le premier réseau CPL,
- un deuxième dispositif coordinateur (2B) relié au deuxième réseau CPL pour coordonner le deuxième réseau CPL,
- le nœud apte à maintenir une connexion, comportant :
∘ une mémoire stockant une base de données (BDD) comportant des enregistrements de données qu'utilise ledit nœud pour se raccorder au deuxième réseau CPL au moins ;
∘ un processeur (14) étant **caractérisé par**, sur réception d'un signal de changement de topologie du réseau électrique, effectuer les étapes de :
▪ extraction par le nœud des données de la base de données pour se raccorder au deuxième réseau CPL, les données extraites comprenant des données de chiffrement des communications entre le nœud et au moins ledit deuxième dispositif coordinateur, et une adresse du deuxième dispositif coordinateur;
▪ lecture des données extraites pour changer de dispositif coordinateur en passant du premier dispositif coordinateur au deuxième dispositif coordinateur, pour un raccordement du nœud transféré du premier réseau CPL au deuxième réseau CPL.

12. Nœud (1) d'un réseau électrique, comportant un circuit (12 ; 16) pour établir une connexion à au moins un premier réseau (A) à Courants Porteurs en Ligne - CPL, le nœud comportant :
- une connexion à une mémoire stockant une base de données (BDD) comportant des enregistrements de données permettant un raccordement à un deuxième réseau CPL au moins ;
- un processeur (14) étant **caractérisé par**, sur réception d'un signal de changement de topologie du réseau électrique, effectuer les étapes de :
• extraction par le nœud des données permettant le raccordement dudit nœud au deuxième réseau CPL, les données extraites comprenant des données de chiffrement des communications entre le nœud et au moins ledit deuxième dispositif coordinateur, et une adresse du deuxième dispositif coordinateur ;
• lecture des données extraites pour passer d'un premier dispositif coordinateur du premier réseau CPL à un deuxième dispositif coordinateur du deuxième réseau CPL, pour un raccordement du nœud transféré du premier réseau CPL au deuxième réseau CPL.

## Patentansprüche

1. Verfahren zum Aufrechterhalten der Verbindung eines Knotens (1) eines Powerline Communication, PLC, Netzwerks, wobei das Verfahren einen Wechsel des Anschlusses des Knotens von einem ersten PLC-Netzwerk (A) zu einem zweiten PLC-Netzwerk (B) umfasst,
wobei das erste PLC-Netzwerk mit einer ersten Koordinatorvorrichtung (2A) des ersten PLC-Netzwerks verbunden ist, wobei das zweite Netzwerk mit einer zweiten Koordinatorvorrichtung (2B) des zweiten PLC-Netzwerks verbunden ist,
wobei sich das erste und das zweite PLC-Netzwerk auf ein Stromnetz mit einer bestimmten Topologie stützen und den Knoten (1), der verbunden gehalten werden soll, enthalten,
wobei der Knoten mit einem Speicher verbunden ist, der eine Datenbank (BDD) speichert, die Einträge von Daten aufweist, welche der Knoten verwendet, um sich wenigstens an das zweite PLC-Netzwerk anzuschließen, und dadurch, dass bei Empfang eines Signals einer Änderung der Topologie des Stromnetzes das Verfahren durch die Schritte gekennzeichnet ist:
- der Extraktion (4), durch den Knoten, der Daten aus der Datenbank, um sich an das zweite PLC-Netzwerk anzuschließen, wobei die extrahierten Daten Verschlüsselungsdaten der Kommunikationen zwischen dem Knoten und wenigstens der zweiten Koordinatorvorrichtung und eine Adresse der zweiten Koordinatorvorrichtung umfassen;
- des Lesens (5) der extrahierten Daten, um die Koordinatorvorrichtung zu wechseln, indem von der ersten Koordinatorvorrichtung zur zweiten Koordinatorvorrichtung übergegangen wird, für einen Anschluss des vom ersten PLC-Netzwerk übertragenen Knotens an das zweite PLC-Netzwerk.

2. Verfahren nach Anspruch 1, **dadurch gekennzeichnet, dass** es außerdem, vor dem Schritt der Extraktion, den Schritt umfasst:
- bei Empfang des Signals einer Änderung der Topologie des Stromnetzes (10A) sendet (10B) die zweite Koordinatorvorrichtung wenigstens an den Knoten eine Nachricht zur Benachrichtigung über den Anschlusswechsel, um an das zweite PLC-Netzwerk angeschlossen zu werden,
und dadurch, dass die Schritte der Extraktion und des Lesens der Daten aus der Datenbank von dem Knoten bei Empfang (10C) der Benachrichtigungsnachricht durchgeführt werden.

3. Verfahren nach Anspruch 2, wobei die zweite Koordinatorvorrichtung über einen Breitbandkommunikationskanal (5B) mit einem Netzwerk (3) verbunden ist, das von einem PLC-Netzwerk verschieden ist,
**dadurch gekennzeichnet, dass** das Signals einer Änderung der Topologie durch die zweite Koordinatorvorrichtung über den Breitbandkommunikationskanal empfangen wird.

4. Verfahren nach einem der Ansprüche 2 und 3, **dadurch gekennzeichnet, dass**:
- die zweite Koordinatorvorrichtung die Benachrichtigungsnachricht an mehrere Knoten sendet,
- die Benachrichtigungsnachricht eine Empfehlung eines Netzwerkwechsels vom ersten PLC-Netzwerk zum zweiten PLC-Netzwerk umfasst, und
- Knoten, die gegenwärtig mit dem ersten PLC-Netzwerk verbunden sind, die Schritte der Extraktion und des Lesens der Daten bei Empfang der Benachrichtigungsnachricht durchführen, während Knoten, die nicht mit dem ersten PLC-Netzwerk verbunden sind, keinen Anschlusswechsel bei Empfang der Benachrichtigungsnachricht ausführen,
wobei die Knoten, welche die Benachrichtigungsnachricht empfangen, sie jeweils an wenigstens einen benachbarten Knoten übertragen.

5. Verfahren nach einem der vorhergehenden Ansprüche, **dadurch gekennzeichnet, dass** das Verfahren außerdem die Schritte umfasst:
- des Sendens (6), durch den Knoten, einer Nachricht zur Überprüfung des Anschlusswechsels an die zweite Koordinatorvorrichtung;
- des Empfangs (T9), durch den Knoten, einer Nachricht zur Quittierung der Verifikationsnachricht, wobei die Quittierungsnachricht von der zweiten Koordinatorvorrichtung kommend empfangen wird, um zu bestätigen, dass der Anschlusswechsel wirksam ist.

6. Verfahren nach Anspruch 5, **dadurch gekennzeichnet, dass** die Verifikationsnachricht durch den Knoten erneut gesendet wird, wenn der Knoten während einer vorbestimmten Zeitdauer nach einem vorangegangen Senden der Verifikationsnachricht keine Quittierungsnachricht empfängt.

7. Verfahren nach einem der vorhergehenden Ansprüche, **dadurch gekennzeichnet, dass** die Daten der Datenbank nach Abschluss einer Prozedur der Initialisierung des Knotens durch den Knoten erhalten und in der Datenbank gespeichert werden, wobei die Prozedur mit der Norm ITU-T G.9903 konform ist.

8. Verfahren nach einem der vorhergehenden Ansprüche, **dadurch gekennzeichnet, dass** die Änderung der Topologie wenigstens einem der folgenden Fälle entspricht:
- Unterbrechung der elektrischen Kontinuität wenigstens eines Teils des Stromnetzes;
- Unterbrechung der Stromversorgung wenigstens eines Teils des Stromnetzes;
- Änderung der elektrischen Leistung, die von wenigstens einem Teil des Stromnetzes transportiert wird.

9. Verfahren nach einem der vorhergehenden Ansprüche, **dadurch gekennzeichnet, dass** das Signal der Änderung der Topologie des Stromnetzes eine Verschlechterung des Kommunikationskanals des ersten PLC-Netzwerks zwischen der ersten Koordinatorvorrichtung und dem Knoten signalisiert.

10. Computerprogramm, welches Anweisungen zur Durchführung des Verfahrens nach einem der vorhergehenden Ansprüche, wenn diese Anweisungen von einem Prozessor (14) ausgeführt werden, umfasst.

11. Telekommunikationssystem über Powerline Communication (PLC) Netzwerke, welches geeignet ist, eine Verbindung eines Knotens (1) mit einem PLC-Netzwerk aufrechtzuerhalten, wobei die Aufrechterhaltung der Verbindung durch einen Wechsel des Anschlusses des Knotens von einem ersten PLC-Netzwerk (A) zu einem zweiten PLC-Netzwerk (B) sichergestellt wird,
wobei sich das erste und das zweite PLC-Netzwerk auf ein Stromnetz mit einer bestimmten Topologie stützen und den Knoten, der verbunden gehalten werden soll, enthalten,
wobei das System aufweist:
- eine erste Koordinatorvorrichtung (2A), die mit dem ersten PLC-Netzwerk verbunden ist, um das erste PLC-Netzwerk zu koordinieren,
- eine zweite Koordinatorvorrichtung (2B), die mit dem zweiten PLC-Netzwerk verbunden ist, um das zweite PLC-Netzwerk zu koordinieren,
- den Knoten, der geeignet ist, eine Verbindung aufrechtzuerhalten, und aufweist:
o einen Speicher, der eine Datenbank (BDD) speichert, die Einträge von Daten aufweist, welche der Knoten verwendet, um sich wenigstens an das zweite PLC-Netzwerk anzuschließen;
∘ einen Prozessor (14), der **dadurch gekennzeichnet ist, dass** er bei Empfang eines Signals einer Änderung der Topologie des Stromnetzes die Schritte durchführt:
▪ der Extraktion, durch den Knoten, der Daten aus der Datenbank, um sich an das zweite PLC-Netzwerk anzuschließen, wobei die extrahierten Daten Verschlüsselungsdaten der Kommunikationen zwischen dem Knoten und wenigstens der zweiten Koordinatorvorrichtung und eine Adresse der zweiten Koordinatorvorrichtung umfassen;
▪ des Lesens der extrahierten Daten, um die Koordinatorvorrichtung zu wechseln, indem von der ersten Koordinatorvorrichtung zur zweiten Koordinatorvorrichtung übergegangen wird, für einen Anschluss des vom ersten PLC-Netzwerk übertragenen Knotens an das zweite PLC-Netzwerk.

12. Knoten (1) eines Stromnetzes, welcher eine Schaltung (12; 16) zum Herstellen einer Verbindung mit wenigstens einem ersten Powerline Communication, PLC, Netzwerk (A) aufweist, wobei der Knoten aufweist:
- eine Verbindung zu einem Speicher, der eine Datenbank (BDD) speichert, die Einträge von Daten aufweist, die einen Anschluss wenigstens an ein zweites PLC-Netzwerk ermöglichen;
- einen Prozessor (14), der **dadurch gekennzeichnet ist, dass** er bei Empfang eines Signals einer Änderung der Topologie des Stromnetzes die Schritte durchführt:
• der Extraktion, durch den Knoten, der Daten, die den Anschluss des Knotens an das zweite PLC-Netzwerk ermöglichen, wobei die extrahierten Daten Verschlüsselungsdaten der Kommunikationen zwischen dem Knoten und wenigstens der zweiten Koordinatorvorrichtung und eine Adresse der zweiten Koordinatorvorrichtung umfassen;
• des Lesens der extrahierten Daten, um von einer ersten Koordinatorvorrichtung des ersten PLC-Netzwerks zu einer zweiten Koordinatorvorrichtung des zweiten PLC-Netzwerks überzugehen, für einen Anschluss des vom ersten PLC-Netzwerk übertragenen Knotens an das zweite PLC-Netzwerk.

## Claims

1. Method for maintaining the connection of a node (1) of a Power-Line Communication, PLC, network, the method including changing the connection of said node from a first PLC network (A) to a second PLC network (B),
the first PLC network being connected to a first coordinator device (2A) of the first PLC network, the second network being connected to a second coordinator device (2B) of the second PLC network,
the first and second PLC networks relying on an electrical network with a determined topology and including the node (1) to be kept connected,
the node being connected to a memory storing a database (BDD) containing data records which said node uses to connect to at least the second PLC network,
and in that, upon receipt of a signal for a change in the topology of the electrical network, the method being **characterised by** the steps of:
- extracting (4), via the node, the data from the database to connect to the second PLC network, the extracted data comprising encryption data for communications between the node and at least said second coordinator device, and an address of the second coordinator device;
- reading (5) the extracted data to change coordinator device by switching from the first coordinator device to the second coordinator device, for handing over a connection of the node from the first PLC network to the second PLC network.

2. Method according to claim 1, **characterised in that** it further includes, prior to the extraction step, the step of:
- upon receipt of the signal for a change in the topology of the electrical network (10A), the second coordinator device transmits, (10B) at least to said node, a connection change notification message to be attached to the second PLC network, and **in that** the steps of extracting and reading the data from the database are implemented by the node, upon receipt (10C) of said notification message.

3. Method according to claim 2, wherein the second coordinator device is connected to a network (3) that is different from a PLC network, via a high-speed communication channel (5B),
**characterised in that** the signal for a change in topology is received by the second coordinator device via the high-speed communication channel.

4. Method according to one of claims 2 and 3, **characterised in that**:
- the second coordinator device transmits the notification message to a plurality of nodes,
- the notification message contains a recommendation to change the network from the first PLC network to the second PLC network, and
- nodes currently connected to the first PLC network implement the data extraction and reading steps upon receipt of said notification message, whereas nodes not connected to the first PLC network do not carry out a change of connection upon receipt of said notification message,
each of the nodes receiving the notification message transmitting same to at least one adjacent node.

5. Method according to one of the preceding claims, **characterised in that** it further includes the steps of:
- transmitting (6), via the node, a connection change verification message to the second coordinator device;
- receiving (T9), via the node, an acknowledgement message for said verification message, the acknowledgement message being received from the second coordinator device to confirm that the connection change has been carried out.

6. Method according to claim 5, **characterised in that** the verification message is retransmitted by the node if the node does not receive an acknowledgement message during a predetermined period of time after a previous transmission of the verification message.

7. Method according to one of the preceding claims, **characterised in that** the data in the database are obtained by the node and stored in the database following a node bootstrapping procedure, said procedure being compliant with the standard ITU-T G.9903.

8. Method according to one of the preceding claims, **characterised in that** the change in topology corresponds to at least one of the following cases:
- a break in the electrical continuity of at least part of the electrical network;
- a break in the electrical power supply to at least part of the electrical network;
- a change in the electrical power carried by at least part of the electrical network.

9. Method according to one of the preceding claims, **characterised in that** the signal for a change in the topology of the electrical network indicates a deterioration of the communication channel of the first PLC network between the first coordinator device and the node.

10. Computer program containing instructions for implementing the method according to any of the preceding claims, where these instructions are executed by a processor (14).

11. Power-Line Communication, PLC, telecommunications system capable of maintaining a connection of a node (1) to a PLC network, the connection being maintained by changing the connection of said node from a first PLC network (A) to a second PLC network (B),
the first and second PLC networks relying on an electrical network with a determined topology and including the node to be kept connected,
the system including:
- a first coordinator device (2A) connected to the first PLC network to coordinate the first PLC network,
- a second coordinator device (2B) connected to the second PLC network to coordinate the second PLC network,
- the node capable of maintaining a connection, including:
-- a memory storing a database (BDD) containing data records which said node uses to connect to at least the second PLC network;
-- a processor (14) being **characterised in that** it allows, upon receipt of a signal for a change in the topology of the electrical network, the following steps to be carried out:
--- extracting, via the node, the data from the database to connect to the second PLC network, the extracted data comprising encryption data for communications between the node and at least said second coordinator device, and an address of the second coordinator device;
--- reading the extracted data to change coordinator device by switching from the first coordinator device to the second coordinator device, for handing over a connection of the node from the first PLC network to the second PLC network.

12. Node (1) of an electrical network, including a circuit (12; 16) for establishing a connection to at least a first Power-Line Communication (PLC) network (A), the node including:
- a connection to a memory storing a database (BDD) containing data records allowing for connection to at least a second PLC network;
- a processor (14) being **characterised in that** it allows, upon receipt of a signal for a change in the topology of the electrical network, the following steps to be carried out:
- extracting, via the node, the data allowing for the connection of said node to the second PLC network, the extracted data comprising encryption data for communications between the node and at least said second coordinator device, and an address of the second coordinator device;
- reading the extracted data to switch from a first coordinator device of the first PLC network to a second coordinator device of the second PLC network, for handing over a connection of the node from the first PLC network to the second PLC network.
